# EUROPÄISCHE PATENTSCHRIFT

(11) **EP 0 825 377 B1**
(45) Veröffentlichungstag und Bekanntmachung des Hinweises auf die Patenterteilung: **24.07.2002**
(21) Anmeldenummer: 97114099.1
(22) Anmeldetag: 15.08.1997
(51) Int. Cl.: F16L 41/08, F16L 41/02

(54) **Vorrichtung und Verfahren zum Erstellen von Rohrleitungsabzweigen**
Device and method for pipeline branchings
Dispositif et procédé pour branchements de tuyauteries

(30) Priorität: 16.08.1996 DE 19633015
(43) Veröffentlichungstag der Anmeldung: 25.02.1998
(73) Patentinhaber: Witzenmann GmbH, 75175 Pforzheim (DE)
(72) Erfinder: Berger, Peter W., Dipl.-Ing., 75181 Pforzheim-Eutingen (DE)
(74) Vertreter: Blumenröhr, Dietrich

(56) Entgegenhaltungen:
- DE-U- 29 503 168
- US-A- 3 468 346
- US-A- 3 633 943
- US-A- 3 695 643
- US-A- 3 785 682
- US-A- 3 825 286

## Beschreibung

Die Erfindung betrifft eine Abzweigvorrichtung zum Anschluß einer Abzweigleitung an mediumführende, insbesondere ring- oder schraubengangförmig gewellte Leitungen. Derartige mediumführende Leitungen finden beispielsweise als Fernwärmeleitungen, etwa als sogenannte Fernheizkabel, Anwendungen.

Um diese Leitungen zur Herstellung von Hausanschlüssen mit Abzweigleitungen zu verbinden, ist es zum einen bekannt, die mediumführende Leitung durchzutrennen und mit T-förmigen Abzweigvorrichtungen über geeignete Flansche zu verbinden, wobei dann über einen weiteren Flansch die Abzweigvorrichtung an die Abzweigleitung angeschlossen ist. Für ein nachträgliches Anschließen einer Abzweigleitung an die im Betrieb befindliche mediumführende Leitung ist diese Art der Abzweigvorrichtung wegen des Durchtrennens der Leitung allerdings nicht geeignet.

Zum anderen ist es für glattwandige Rohrleitungen bekannt, eine sattelförmige Abzweigvorrichtung an die Rohrleitung anzuschweißen, wobei die Verbindung mit der Abzweigleitung durch geeignete Anbohrtechniken erfolgen kann, ohne daß der Betrieb der mediumführenden Leitung unterbrochen werden muß. Nachteilig an dieser Lösung ist es jedoch, daß die in der Regel insbesondere bei Fernwärmeleitungen verwendeten gewellten Leitungen für eine solche Anschweißtechnik aufgrund ihrer undefinierten und durch die Wellung stark profilierten Oberflächenform, die beispielsweise vom Dehnungszustand der Leitung abhängt, nicht geeignet sind.

Es sind schließlich noch Abzweigvorrichtungen beispielsweise aus der GB-A 1,140,549 bekannt, bei denen die mediumführende Leitung im Abzweigbereich von einem eine Öffnung zum Anschluß der Abzweigleitung aufweisenden Gehäuse umgeben ist, das Gehäuse mit aushärtbarem Material gefüllt ist und die Einheit aus Gehäuse und Material die Leitung mediendicht umschließt, wobei eine Bohrung durch das ausgehärtete Material in die Leitung eingebracht wird und hierdurch eine Abzweigleitung am Gehäuse festgelegt und an die Bohrung angeschlossen werden kann. Diese Abzweigvorrichtungen eignen sich jedoch nicht für die bei Fernwärmeleitungen üblichen hohen Drücke, da der Anschluß der Abzweigleitung am Gehäuse keine druckfeste und dichte Verbindung gewährleisten kann.

Hiervon ausgehend liegt der vorliegenden Erfindung die Aufgabe zugrunde, eine Abzweig-Vorrichtung für mediumführende, insbesondere ring- oder schraubengangförmig gewellte Leitungen zur Verfügung zu stellen, die unabhängig von der Form der mediumführenden Leitung den Anschluß einer Abzweigleitung ermöglicht, ohne daß hierfür die mediumführende Leitung außer Betrieb gesetzt werden müßte, und die außerdem auch zum dauerhaften Einsatz unter den bei Fernwärmeleitungen üblichen hohen Drücken geeignet sind.

Diese Aufgabe wird erfindungsgemäß durch eine Abzweigvorrichtung mit dem Merkmalen des Anspruchs 1 gelöst.

Diese erfindungsgemäße Abzweigvorrichtung hat den Vorteil, daß eine Abzweigleitung an beliebiger Stelle der mediumführenden Leitung angeschlossen werden kann, und daß gegebenenfalls die genaue beanspruchungsabhängige Form der Wellung unberücksichtigt bleiben kann und keinen Einfluß auf die Qualität der Anschlußverbindung hat, da das aushärtbare Material sich an die exakten vor Ort bestehenden Gegebenheiten der Rohrleitung anpaßt. Außerdem muß das Gehäuse selbst die mediumführende Leitung nicht vollständig dicht umgeben, was insbesondere bei schraubengangförmig gewellten Leitungen auch ohne unverhältnismäßig großen Aufwand gar nicht möglich wäre; vielmehr gleicht das aushärtbare Material die Zwischenräume zwischen Gehäuse und mediumführender Leitung und insbesondere deren Wellentälern ebenso wie sonstige Undichtigkeiten mediendicht aus.

Der sich durch das aushärtbare Material bis zur mediumführenden Leitung erstreckende Abzweigkanal nimmt die hohen Drücke - wie sie üblicherweise bei Fernwärmeleitungen vorherrschen - direkt an der Anschlußstelle auf und führt sie durch das Gehäuse und die Gehäuseöffnung auf die Außenseite der Abzweigvorrichtung, wo die Abzweigleitung angeschlossen werden kann. Hierdurch werden etwaige Undichtigkeiten zwischen dem herkömmlicherweise in das aushärtbare Material gebohrten Abzweigkanal und dem Gehäuse bzw. der hieran angeschlossenen Abzweigleitung vermieden.

Die aufnehmbaren Druckkräfte werden insbesondere noch dadurch erhöht und hiermit die Dichtigkeit selbst bei extremen Verhältnissen verbessert, wenn der Abzweigkanal gegenüber dem aushärtenden Material festgelegt und insbesondere mit diesem in Axialrichtung des Kanals formschlüssig verbunden ist. Außerdem empfiehlt es sich auch, den Abzweigkanal gegenüber dem Gehäuse festzulegen und insbesondere mit diesem ebenfalls in Axialrichtung formschlüssig zu verbinden. Der Formschluß kann jeweils über am Abzweigkanal vorgesehene Vertiefungen und/oder Aufweitungen hergestellt sein, die über den Umfang des Abzweigkanals umlaufen können.

Besonders vorteilhaft für die Aufnahme großer Druckkräfte ist es, wenn der Abzweigkanal gegenüber der mediumführenden Leitung festgelegt ist und hierzu beispielsweise formschlüssig mit dieser verbunden ist, was etwa über am Abzweigkanal festgelegte und die mediumführende Leitung umgreifende Umschlingungsmittel, insbesondere Klammern, Bügel, oder Bänder herstellbar ist.

Darüber hinaus besteht ein Vorteil darin, daß die mediumführende Leitung während des Anbringens der Abzweigvorrichtung nicht außer Betrieb gesetzt werden muß, was beispielsweise bei einer Fernwärmeleitung das vollständige Leeren dieser Leitung und die Unterbrechung der Wärmeversorgung aller an die Leitung angeschlossenen Haushalte bedeuten würde. Vielmehr erfolgt bei der erfindungsgemäßen Abzweigvorrichtung der Anschluß der Abzweigleitung in zwei Schritten: In der ersten Phase wird der Abzweigkanal im Abzweigbereich vorgesehen und das um die mediumführende Leitung gelegte Gehäuse mit aushärtbarem Material gefüllt, während erst in der zweiten Phase die mediumführende Leitung in herkömmlicher Anbohrtechnik, also unter gleichzeitigem Abdichten der Bohrstelle, mit einer Bohrung versehen wird. Schließlich kommt der ganze Anschlußvorgang auch ohne ein Schweißverfahren aus, was aufgrund des baustellenseitigen Aufwandes bevorzugterweise vermieden wird.

Natürlich läßt sich die erfindungsgemäße Abzweigvorrichtung auch für starre und glattwandige Leitungen verwenden, wodurch sich auch hierfür ein Anschlußverfahren ohne jegliche Schweißverbindung zur Verfügung stellen läßt. Das direkte Anbohren der mediumführenden Leitung vermindert auch hier durch den Verzicht auf aufwendige Flanschlösungen das Dichtheitsrisiko.

Um den gesamten Gehäuseinnenraum mit dem aushärtbaren Material füllen zu können, empfiehlt es sich, wenn das Gehäuse die mediumführende Leitung mit radialem Abstand umgibt. Dies gilt vor allem für den die Bohrung umgebenden Bereich, da dessen Dichtheit wesentlich für die Abzweigvorrichtung ist. Die axial entfernteren Gehäuseabschnitte sollten nur zur Unterstützung des die Bohrung und den Abzweigkanal umgebenden Bereiches ebenfalls dicht mit der medienführenden Leitung verbunden sein.

Was das Gehäuse betrifft, so besteht dies vorteilhafterweise aus zumindest zwei achsparallelen Teilschalen, die bereits vor der Montage zweckmäßigerweise miteinander entweder einstückig oder über ein Scharnier verbunden und dementsprechend biegbar oder klappbar ausgeführt sind; darüber hinaus sind auch Steckverbindungen zwischen den Teilschalen denkbar, die die Montage und das gegenseitige Festlegen erleichtern. Jede der Teilschalen umfaßt einen Teilbereich des Umfanges der mediumführenden Leitung, so daß sie die Leitung dicht umschließen. Erst durch diesen segmentartigen Aufbau des Gehäuses ist der nachträgliche Einbau der Abzweigvorrichtung möglich, der ohne ein Durchtrennen der mediumführenden Leitung auskommt. Hierbei werden die Einzelteile um die Leitung gelegt und erst nach dem Anbringen vor Ort gegeneinander festgelegt. Dieses gegenseitige Festlegen erfolgt bevorzugterweise über Ringschellen, Spannbänder oder Verschlußkeile und ist ebenso durch alle anderen herkömmlichen Verbindungsvarianten möglich; insbesondere empfiehlt sich aber ein beiden Teilschalen zugeordnetes, an deren Unterseite befindliches Scharnier, wobei die Gehäuseoberseite in diesem Fall zweckmäßigerweise einen Gehäusestutzen - bzw. jede Teilschale einen halben Gehäusestutzen - aufweist und auf diesen Gehäusestutzen ein die beiden Teilschalen gegeneinander festlegender Abzweigstutzen aufgesteckt ist.

Wesentlich für die Qualität der Abzweigvorrichtung ist das verwendete aushärtbare Material, das vorzugsweise aus einem kalt aushärtenden, fiüssigen Gießmittel besteht, welches insbesondere temperaturbeständiges Epoxidharz aufweist. Zweckmäßigerweise wird hierbei ein Zwei-Komponenten-Gießmittel verwendet, wobei die Komponenten miteinander vermischt sind und erst nach Zugabe eines Startermittels, was zweckmäßigerweise erst kurz vor dem Verfüllen des Gehäuses erfolgt, miteinander reagieren. Darüber hinaus kann das Gießmittel zusätzliche pulverförmige Füllstoffe - beispielsweise Aluminiumteilchen - aufweisen, um so dem Gießmittel bestimmte Eigenschaften zu verleihen.

Was das Einbringen des Abzweigkanals in das aushärtbare Material betrifft, so ist es erforderlich, daß der rohrförmige Abzweigkanal vor dem Verfüllen in das Gehäuse eingesetzt wird und als verlorene Gußform fungiert, wobei das aushärtbare Material zweckmäßigerweise über einen im Gehäuse vorgesehenen Einfüllstutzen eingefüllt wird. Dieser Abzweigkanal erstreckt sich durch die Gehäuseöffnung auf die Außenseite der Abzweigvorrichtung und dient zum Anschließen und Festlegen der Abzweigleitung.

Was das Gehäuse betrifft, so weist es zweckmäßigerweise zwei Aussparungen zum Durchtritt der mediumführenden Leitungen auf, wobei der Querschnitt der Aussparungen dem Außendurchmesser der Leitung angepaßt ist. Zwar empfiehlt es sich, den Zwischenraum zwischen Gehäuse-Aussparung und mediumführender Leitung gering zu halten, aber insbesondere gegenüber den Wellentälern der gewellten Leitungen wäre dies nur unter unverhältnismäßigem Aufwand möglich. Gemäß dem wesentlichen Aspekt der vorliegenden Erfindung wird der zwischen den Aussparungen und der mediumführenden Leitung belassene Bereich vom aushärtbaren Material abgedichtet, wobei die Zähigkeitseigenschaften des aushärtbaren Materials an die jeweilige Größe des Zwischenraumes angepaßt werden kann. Je größer der Abstand zwischen den Aussparungen und der mediumführenden Leitung ist, desto zähflüssiger sollte das aushärtbare Material sein.

Für das Material von Abzweigleitung und Abzweigkanal empfiehlt sich im Hinblick auf eine gute Schweißbarkeit - sofern ein Schweißen vorgesehen ist - ferritischer Stahl oder ein austenitisches Wellrohr, während das Gehäuse auch aus vor allem glasfaserverstärktem Kunststoff bestehen kann oder aber aus Metall wie etwa Edelstahl- oder Stahlblech aufgebaut ist.

Der Bereich der Gehäuseaussparungen für die mediumführende Leitung wird zweckmäßigerweise durch direkt im Gehäuse vorgesehene Aussparungen zur Verfügung gestellt, ebenso ist es jedoch auch vorteilhaft, separate, diesen Bereich abdeckende Gehäuseschellen vorzusehen, die über geeignete Verbindungstechniken auf das in diesem Fall einfacher aufgebaute eigentliche Gehäuse aufgesteckt werden können.

Schließlich können in einfacher Weise auch die handelsüblichen Montageabzweige für Fernwärmeleitungen Anwendung finden, welche bisher nur dazu verwendet werden, angeschweißte und demnach mit Betriebsunterbrechung beim Montieren verbundene Abzweigleitungen für Isolierzwecke zu umschließen. Diese herkömmlichen Montageabzweige werden in der Regel um eine die mediumführende Leitung umgebende Isolierschicht gelegt, so daß im hier vorliegenden Fall bei einem Verfüllen ohne axial angrenzendes Isoliermaterial zweckmäßigerweise die axialen Aussparungen des Gehäuses durch entsprechende Aufsätze etwas verkleinert werden. Ebenso kann jedoch auch das die mediumführende Leitung umgebende angrenzende Isoliermaterial als verlorene Gußform werden.

Für das Einbringen der Bohrung in die mediumführende Leitung empfehlen sich die bei der Anbohrtechnik für starre Verbundleitungen üblichen Methoden, wie etwa die Verwendung eines die Bohrstelle abdichtenden Anbohrhahnes und einer Lochsäge mit Zentrierbohrer.

Neben der Abzweigvorrichtung betrifft die vorliegende Erfindung auch ein Verfahren zum Erstellen von Abzweigen für mediumführende, insbesondere ring- oder schraubengangförmig gewellte Leitungen, insbesondere unter Verwendung der vorstehend beschriebenen Abzweigvorrichtung, wobei das Verfahren jedoch auch unabhängig von der offenbarten Abzweigvorrichtung in erfindungsgemäßer Weise ausgeführt werden kann. Um ein Verfahren zur Verfügung zu stellen, das das Erstellen von Abzweigen auch ohne Betriebsunterbrechung und insbesondere für gewellte Leitungen ermöglicht, ist das vorgeschlagene erfindungsgemäße Verfahren durch die Merkmale des Anspruchs 20 gekennzeichnet.

Zur Erzielung vorteilhafter Ausführungsformen des erfindungsgemäßen Verfahrens zum Erstellen von Abzweigen läßt sich dieses Verfahren auch mit all den vorstehend aufgeführten in bezug auf die Abzweigvorrichtung beschriebenen Merkmalen und insbesondere mit den in den weiteren abhängigen Unteransprüchen enthaltenen Merkmalen kombinieren.

Weitere Vorteile und Merkmale der vorliegenden Erfindung ergeben sich aus der nachfolgenden Beschreibung von Ausführungsbeispielen anhand der Zeichnungen; hierbei zeigen
- Figur 1: eine erfindungsgemäße Abzweigvorrichtung in eingebautem Zustand in teilweise geschnittener Vorderansicht;
- Figur 2: die Abzweigvorrichtung in perspektivischer Seitenansicht;
- Figuren 3 - 8: die Abfolge einzelner Verfahrensschritte beim Erstellen von Abzweige gemäß des erfindungsgemäßen Verfahrens;
- Figur 9: das Gehäuse einer erfindungsgemäßen Abzweigvorrichtung in schematischer Vorderansicht;
- Figur 10: eine weitere Ausführungsform eines Gehäuses;
- Figur 11: eine alternative Bauform eines Gehäuses für eine Abzweigvorrichtung;
- Figur 12: ein Gehäuse in zweischaliger Ausführung in schematischer Seitenansicht;
- Figur 13: ein Gehäuse in einteiliger Ausführung in schematischer Seitenansicht;
- Figuren 14 - 17: einzelne Details für vorteilhafte Verbindungsarten für die Festlegung verschiedener Gehäusehälften;
- Figuren 18 - 20: in schematischer geschnittener Seitenansicht verschiedene Ausführungsformen für eine erfindungsgemäße Abzweigvorrichtung;
- Figur 21: einen Abzweigkanal zur formschlüssigen Verbindung mit Gehäuse bzw. aushärtbarem Material;
- Figuren 23 - 25: die formschlüssige Anbindung eines Abzweigkanals an einer mediumführenden Leitung.

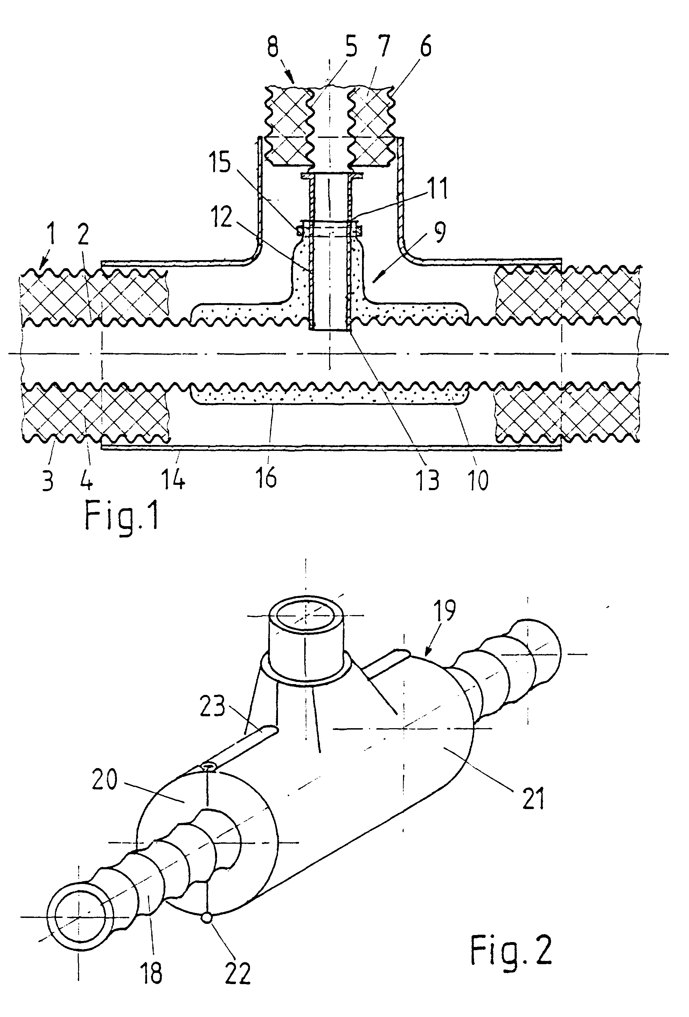

Figur 1 zeigt eine Fernwärmeleitung 1, die aus einer mediumführenden Leitung in Form eines ringgewellten heißwasserführenden Innenrohres 2, einem das Innenrohr konzentrisch umgebenden, ebenfalls ringgewellten Außenrohr 3 und einer dazwischen angeordneten Isolierschicht 4 besteht. An diese Fernwärmeleitung 1 ist eine ebenso aus einer ringgewellten, innenliegenden Abzweigleitung 5, einer diese Abzweigleitung konzentrisch umgebenden ringgewellten Außenleitung 6 und einer dazwischen angeordneten Isolierschicht 7 zusammengesetzte Anschlußleitung 8 zur Herstellung eines Hausanschlusses angeschlossen.

Die Verbindung zwischen Fernwärmeleitung 1 und Anschlußleitung 8 erfolgt über eine erfindungsgemäße Abzweigvorrichtung 9. Diese Abzweigvorrichtung weist ein den Abzweigbereich umgebendes Gehäuse 10 mit einer Gehäuseöffnung 11 auf. Durch diese Gehäuseöffnung 11 erstreckt sich ein Abzweigkanal 12, der von der mediumführenden Leitung 2 ausgeht und aus dem Gehäuse vorsteht. Dieser Abzweigkanal stellt die Verbindung zwischen der Abzweigleitung 5 und der mediumführenden Leitung 2 über eine Bohrung 13 her, die in der mediumführenden Leitung 2 im Übergangsbereich zwischen Abzweigkanal 12 und mediumführender Leitung vorgesehen wird, indem unter Durchquerung des Abzweigkanals ein geeignetes Bohrwerkzeug in die Leitung eindringt. Zwischen Abzweigkanal bzw. mediumführender Leitung und Gehäusewand ist ein aushärtendes Material 16 eingefüllt, das nach dem Verfüllen vom zähflüssigen Zustand in festen Zustand übergeht, wodurch die Einheit aus Gehäuse und aushärtendem Material die mediumführende Leitung mediumdicht umschließt. Hierbei werden vom aushärtenden Material etwaige Zwischenräume zwischen der Gehäusewandung und der mediumführenden Leitung ausgefüllt.

Wie bereits vorstehend erwähnt, wird der Abzweigkanal vor dem Verfüllen eingebracht, und zwar als verlorene Gußform.

In Figur 1 ist desweiteren erkennbar, daß die Abzweigvorrichtung und die Leitungen im Abzweigbereich von einer Muffe 14 umgeben sind, welche jeweils an den Außenrohren 3 bzw. 6 anliegt und über geeignete Verbindungsmittel wie etwa durch Schrumpfschläuche, Klebebänder oder dergleichen festgelegt ist. Als Muffe 14 können beispielsweise die herkömmlichen Montage- oder Schellenabzweige für Fernwärmeleitungen Verwendung finden, die ebenfalls ähnlich dem Gehäuse 9 aus Halbbzw. Teilschalen zusammengesetzt sind.

Die Verbindung der Teilschalen der Muffe 14 bzw. des Gehäuses 9 kann beispielsweise über eine Ringschelle 15 erfolgen, über (nicht dargestellte) Verschlußkeile oder sonstige Festlegungsmittel.

Aus Figur 2 ist in perspektivischer Ansicht eine alternative Bauform einer Abzweigvorrichtung 19 für eine mediumführende Leitung 18 ersichtlich, wobei die Abzweigvorrichtung aus zwei achs-parallelen, entlang einer vertikalen Ebene aneinander anstoßenden Halbschalen 20 und 21 besteht. Beide Halbschalen sind über ein auf der Unterseite der Abzweigvorrichtung angeordnetes Klappschanier 22 und einen auf der Oberseite im Vorderbereich angeordneten Verschlußkeil 23 verbunden. Ein solcher Verschlußkeil kann auch im hinteren Anlagebereich der beiden Hälften angeordnet werden, ist jedoch bei der Darstellung in Figur 2 zur besseren Veranschaulichung weggelassen.

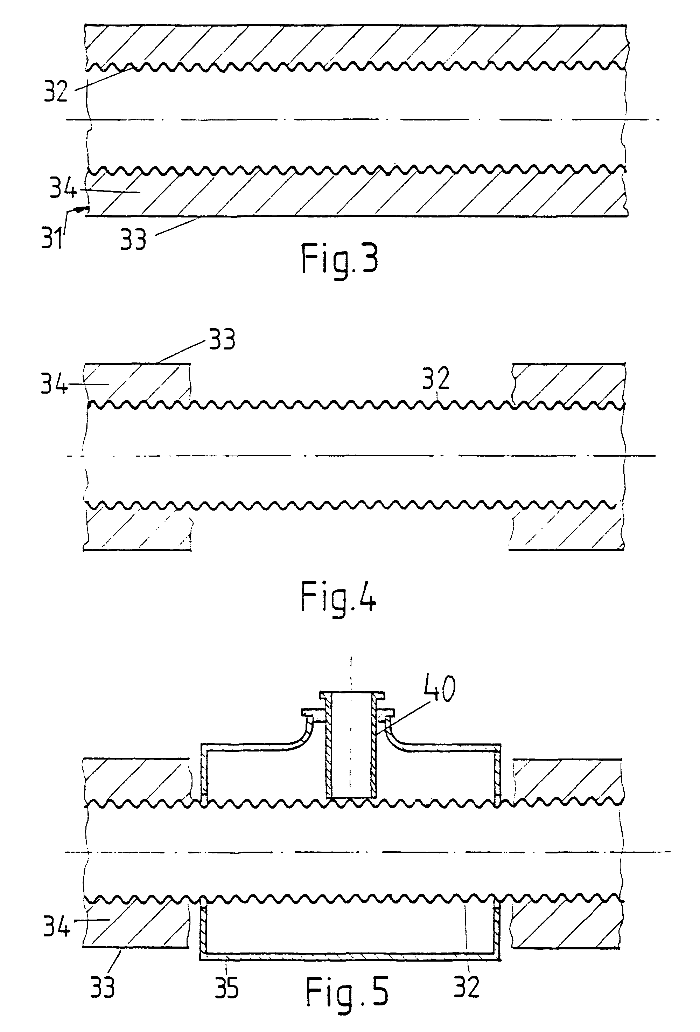

In den Figuren 3 bis 8 ist ein erfindungsgemäßes Verfahren zum Erstellen eines Abzweiges dargestellt. Figur 3 zeigt hierzu eine Fernwärmeleitung 31 mit einer ringgewellten mediumführenden Innenleitung 32, einer die Innenleitung umgebenden, glattwandigen Außenleitung 33 sowie einem Isoliermaterial 34. Wie in Figur 4 dargestellt ist, wird die Außenleitung 33 entlang einer der Größe einer Abzweigvorrichtung entsprechenden Länge durchgetrennt sowie die Isolierschicht 34 unter Belassung der Innenleitung 32 entfernt.

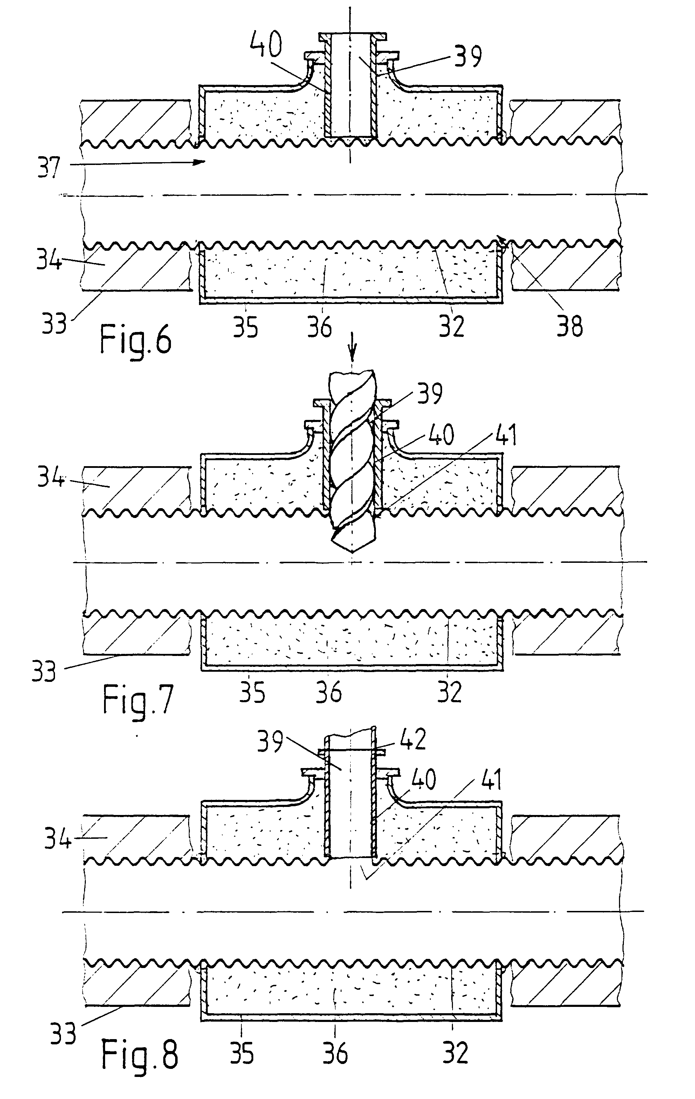

In diesen Bereich wird ein aus zwei Halbschalen bestehendes Gehäuse 35 um die Innenleitung 32 angeordnet - siehe hierzu Figur 5 - und mit aushärtbarem Gießmittel 36 gemäß der Darstellung in Figur 6 verfüllt, wobei ein vorher eingesetzter Abzweigkanal 40 als verlorene Gußform fungiert. Das Gehäuse weist zwei seitliche Aussparungen 37 und 38 zur Aufnahme der mediumführenden Leitung 32 auf, die zwar an den Querschnitt der Leitung angepaßt sind, jedoch die Leitung aufgrund der Wellung nicht mediendicht umschließen können. Wie aus Figur 6 ersichtlich ist, fließt in die Zwischenräume zwischen diese Aussparungen 37 und 38 des Gehäuses und die Außenwand der mediumführenden Leitung 22 das zähflüssige aushärtbare Material 36 und dichtet nach dem Verfestigen diesen Bereich ab.

Gemäß Figur 7 wird hierauf durch eine an der Gehäuseoberseite vorgesehene Öffnung 39 und durch den hierdurch vorstehenden Abzweigkanal 40 eine Bohrung 41 in die mediumführende Leitung 32 gebohrt. Über geeignete Anbohrtechniken kann hierbei sichergestellt werden, daß die mediumführende Leitung ohne Betriebsunterbrechung und Undichtigkeit mit der Bohrung versehen werden kann.

In Figur 8 ist hierzu dargestellt, wie nach dem Entfernen des Bohrwerkzeuges eine Abzweigleitung 42 an den Abzweigkanal 40 angeschlossen wird und so mit der Bohrung 41 der mediumführenden Leitung in Verbindung steht. Hierzu weist die Abzweigleitung zweckmäßigerweise einen endständigen Flansch auf, der zum Festlegen am Abzweigkanal 40 bzw. dessen endständigen Flansch dient.

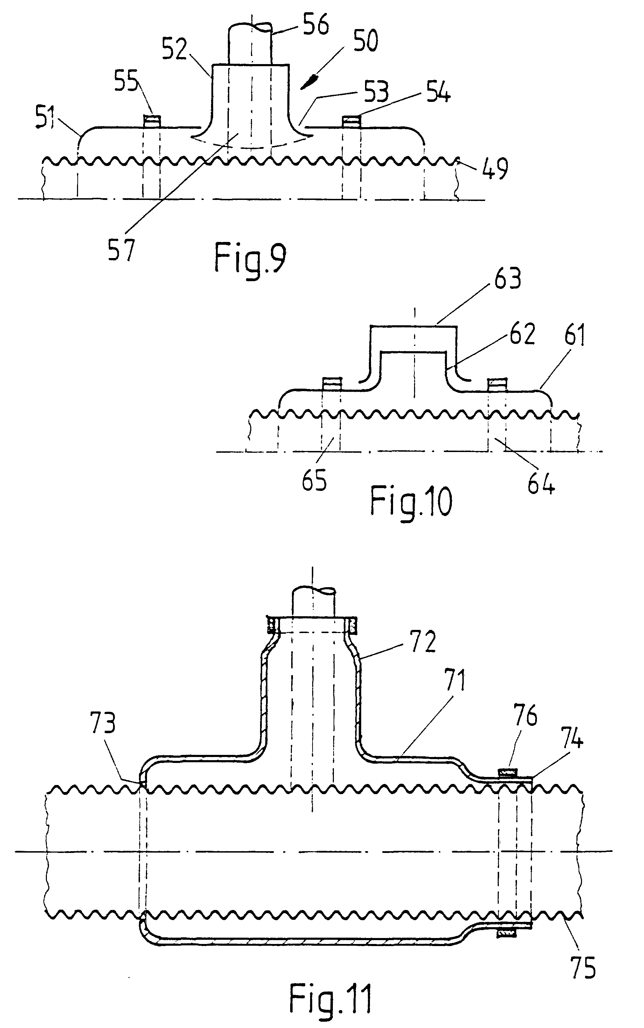

Figur 9 zeigt in schematischer auszugsweiser Vorderansicht einen möglichen Aufbau eines zusammengesetzten Gehäuses 50, das aus einem zylindrischen, die mediumführende Leitung 49 umgebenden Grundkörper 51 besteht, welcher aus zwei achs-parallelen Halbschalen zusammengesetzt ist sowie aus einem rohrförmigen Abzweigstutzen 52 für eine Abzweigleitung 56, die an einen mit der mediumführenden Leitung verbundenen Abzweigkanal 57 anzuschließen ist. Der Stutzen 52 ist in eine im Gehäuse 51 vorgesehene Öffnung 53 eingesteckt und überlappt den Rand dieser Öffnung mit seinem trichterförmig aufgeweiteten Ende von der Innenseite her. Durch das aushärtende Material wird dieser Stutzen 52 gegen die Gehäusehalbschalen 51 und die Öffnungsränder flüssigkeitsdicht festgelegt. Gleichzeitig sorgt der Stutzen für einen einstückigen Durchtrittsbereich für den Abzweigkanal 57, der sonst von den beiden Öffnungskanten des zweigeteilten Gehäuses umgeben sein würde. Die beiden achs-parallelen Gehäusehalbschalen 51 werden schließlich durch zwei Ringschellen 54 und 55 aneinander befestigt.

In Figur 10 ist eine Variante zu der Bauform des Gehäuses aus Figur 9 ersichtlich, bei der ein aus zwei Gehäusehalbschalen zusammengesetztes Gehäuse 61 einen angeformten Gehäusestutzen 62 aufweist. Auf diesen Gehäusestutzen 62 ist ein Abzweigstutzen 63 aufgesetzt, der insbesondere zur Aufnahme der auf die Abzweigleitung bzw. den Abzweigkanal einwirkenden Biegemomente dient. Gleichzeitig können hierdurch aber auch die beiden Gehäusehalbschalen aneinander festgelegt werden. Sind beide Gehäusehälften auf ihrer Unterseite über ein Scharnier verbunden, so kann hierdurch auf separate Spannbänder verzichtet werden. Allerdings ist auch der Abzweigstutzen 63 am Gehäusestutzen 62 festzulegen, was beispielsweise über geeignete Schellen erfolgen kann. Fehlt ein Verbindungsscharnier, so werden die beiden Halbschalen des Gehäuses 61 in Figur 10 in herkömmlicher Weise mit Spannbändern 64, 65 aneinander festgelegt.

Figur 11 zeigt eine weitere Bauform eines Gehäuses 71 mit angeformtem Gehäusestutzen 72. Hierbei sind insbesondere zwei Varianten einer Gehäuseaussparung 73 bzw. 74 beschrieben, die zur Aufnahme einer nur schematisch dargestellten mediumführenden Leitung 75 dienen. Während die in Figur 11 auf der linken Seite angeordnete Aussparung 73 radial nach innen ausläuft und der Querschnitt der Aussparung dem Außendurchmesser der Rohrleitung angepaßt ist, läuft das Gehäuse 71 bei der Aussparung 74 axial aus und erstreckt sich über einen gewissen Bereich parallel zur Rohrleitung 75. Dieser parallele Bereich kann beispielsweise zur Aufnahme eines Spannbandes 76 zur Fixierung der beiden Gehäusehalbschalen dienen

Durch den parallelen Verlauf wird der Dichtungsbereich zwischen Gehäusewandung und Rohrleitung 75 verlängert und somit ein verstärktes Auslaufen des aushärtenden Materials durch die Aussparung 74 verhindert, was auf der anderen Seite dazu führt, daß das aushärtende Material aufgrund der engen Anlage der Aussparungswandung an der Rohrleitung insbesondere bei einer ringgewellten Rohrleitung nicht bis in den Außenbereich der Aussparung, also nicht bis zum axialen Gehäuseende vordringen kann. Dies wäre allenfalls noch bei einer schraubengangförmig gewellten Rohrleitung möglich. Hierdurch wird auch offensichtlich, daß für die vorliegende Erfindung wesentlich ist, daß das Gehäuse mit Ausnahme im Bereich seiner Aussparungen einen ausreichenden radialen Abstand zur Rohrleitung aufweist, so daß sich das aushärtende Material bis hin zu den Aussparungen ausbreiten und seine Dichtungsfunktion erfüllen kann.

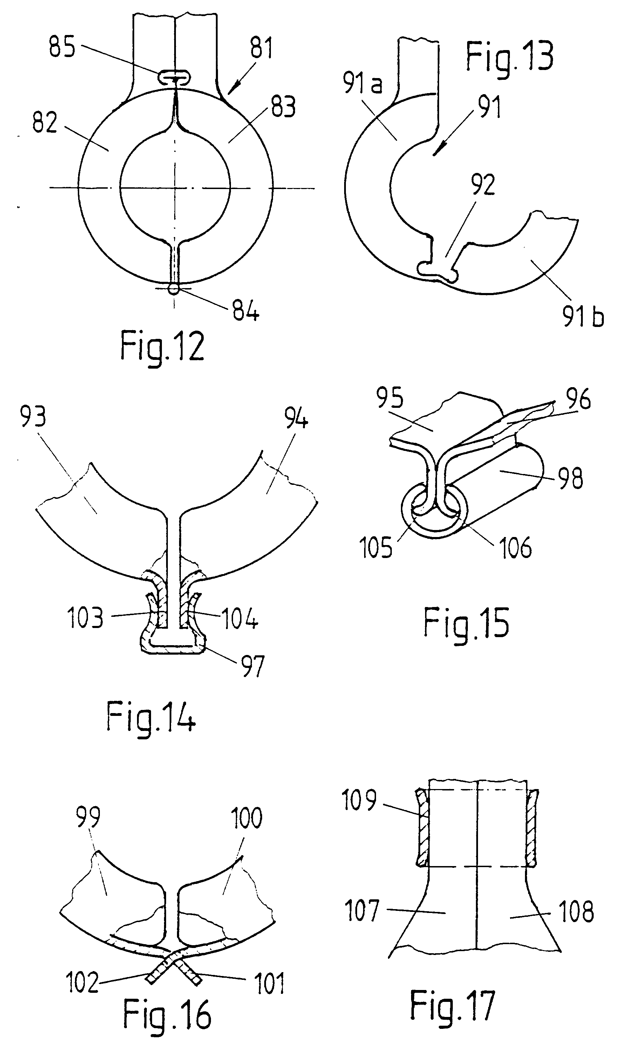

Figur 12 zeigt noch einmal schematisch den Aufbau eines aus zwei Halbschalen 82 und 83 zusammengesetzten Gehäuses 81, das in etwa dem Aufbau der Abzweigvorrichtung 19 aus Figur 2 entspricht. Während an der Gehäuseunterseite ein Scharnier 84 die beiden Gehäusehalbschalen 82 und 83 miteinander klappbar verbindet, ist im oberen Bereich ein Verschlußkeil 85 angeordnet, der entsprechend ausgebildete Vorsprünge der beiden Gehäusehalbschalen aneinander festlegt.

Figur 13 zeigt eine schematische Darstellung eines aus zwei miteinander einstückig verbundenen Teilschalen 91a und 91b bestehenden einteiligen Gehäuses 91, das über einen Biegebereich 92 in Form einer Nut biegbar ausgeführt ist. In diesem Fall muß die Festlegung der beiden Gehäusehälften lediglich im oberen Bereich erfolgen.

Figur 14 und Figur 15 zeigen jeweils eine Variante, mit der zwei aneinander anliegende Gehäusehälften 93 und 94 bzw. 95 und 96 gegenseitig festlegbar sind: Bei beiden Ausführungformen erstreckt sich ausgehend von den Gehäusehalbschalen nach radial außen jeweils ein Vorsprung 103 und 104 bzw. 105 und 106. Über einen Verschlußkeil 97 bzw. 98 werden jeweils die zwei benachbarten Vorsprünge federnd gegeneinander verspannt. Während bei der Ausführungsform gemäß Figur 15 die beiden Vorsprünge 103 und 104 parallel zueinander verlaufen und beide Gehäuseschalen aufgrund der Federkraft des Verschlußkeiles 97 zusammengehalten werden, sind die beiden Vorsprünge 105 und 106 jeweils voneinander weg umgebogen, so daß der Verschlußkeil 98 beide Vorsprünge formschlüssig umfaßt.

Figur 16 zeigt eine alternative Ausführungsform hierzu, bei der zwei Gehäusehälften 99 und 100 über zwei Vorsprünge 101 und 102 verbunden sind, indem die beiden Vorsprünge ineinander verschränkt sind.

Figur 17 zeigt schließlich noch eine Fixierungsvariante, bei der zwei Gehäusehalbschalen 107 und 108 durch einen aufgesteckten, vorzugsweise leicht konisch verlaufenden Ring 109 verbunden sind. Dieser Ring erstreckt sich zwar nur im Bereich des von den Gehäusehalbschalen ausgehenden Abzweigstutzens, dies ist jedoch der insbesondere im Hinblick auf durch die Abzweigleitung eingeleiteten Biegemomente kritischste Bereich.

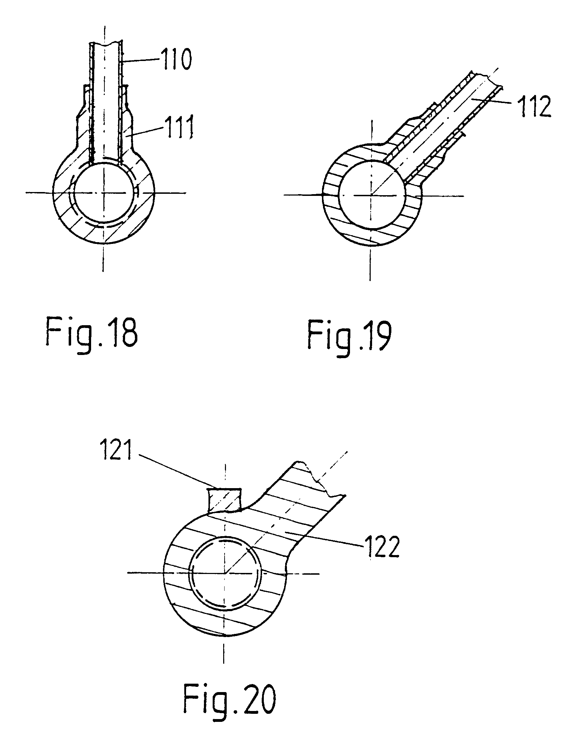

In den Figuren 18 - 20 sind verschiedene Orientierungs- bzw. Verfüllvarianten dargestellt: Gemäß Figur 18 erstreckt sich ein Abzweigkanal 110 in Vertikalrichtung, wobei ein die Leitung umgebendes Gehäuse 111 hieran angepaßt ist. Bei der Ausführungsform gemäß Figur 19 verläuft ein Abzweigkanal 112 schräg zur Vertikalrichtung. Diese Variante findet insbesondere dann Anwendung, wenn zwei zueinander parallele mediumführende Leitungen übereinander angeordnet sind und die angeschlossene Abzweigleitung an der darüber liegenden mediumführenden Leitung vorbeigeführt werden muß. Hierzu verläuft die an den Abzweigkanal 12 angeschlossene Abzweigleitung zunächst in Schrägrichtung, woraufhin diese bei ausreichendem Abstand der darüber angeordneten mediumführenden Leitung parallel zu deren Abzweigleitung verläuft.

Für eine Bauform einer Abzweigvorrichtung mit schräg verlaufender Abzweigleitung empfiehlt es sich - wie in Figur 20 dargestellt ist -, einen separaten Einfüllstutzen 121 am Gehäuse 122 vorzusehen, der nach dem Einfüllen abgedichtet und stillgelegt wird.

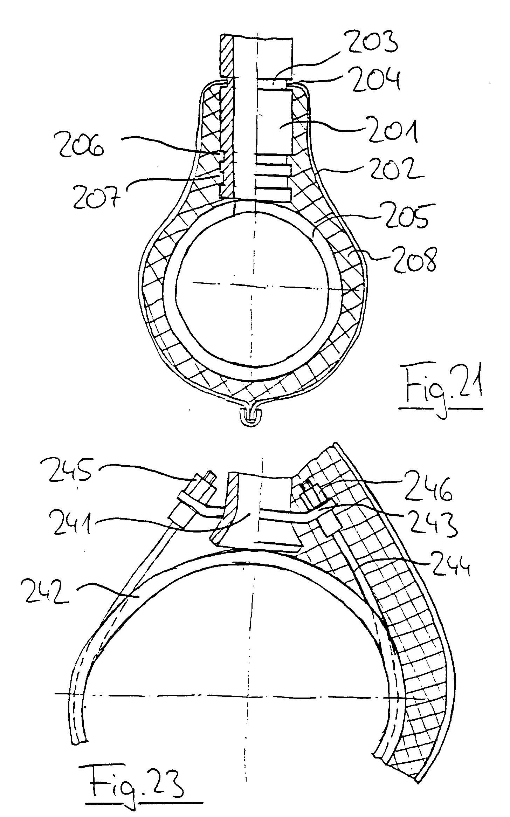

Figur 21 zeigt eine besondere Ausgestaltungsform des Abzweigkanals 201, der zur Herstellung einer axial formschlüssigen Verbindung mit dem Gehäuse 202 eine Umfangsnut 203 aufweist, in die das Gehäuse im Bereich seiner Öffnung 204 eingreift. Der Abzweigkanal weist darüber hinaus im endständigen Bereich der mediumführenden Leitung 205 Umfangsnuten 206, 207 auf, die einen Formschluß mit dem in das Gehäuse eingefüllten und den Abzweigkanal umgebenden aushärtenden Material 208 herstellt. Beide formschlüssigen Verbindungen, also diejenige mit dem Gehäuse und diejenige mit dem aushärtenden Material führen dazu, daß der Abzweigkanal die hohen Fernwärmeleitungsdrücke aufnehmen kann, ohne daß er hierbei axial von der mediumführenden Leitung weggedrückt werden kann und hierdurch Undichtigkeiten erzeugt.

Die Figuren 22a, 22b, 22c und 22d zeigen jeweils in Seiten und Vorderansicht Ausgestaltungsformen für den Abzweigkanal, die einen Formschluß mit dem aushärtenden Material herstellen: So ist in Figur 22a noch einmal der Abzweigkanal 201 aus Figur 21 dargestellt, während in Figur 22b ein Abzweigkanal 211 abgebildet ist, der eine Querschnittsaufweitung 212 in Form eines Umfangssteges aufweist. Die Figuren 22c und 22d zeigen jeweils Querschnittserweiterungen der Abzweigkanäle 221 bzw. 231, und zwar in Figur 22c eine sattelförmige Auftulpung 222 und in Figur 22d eine konzentrische Auftulpung 232.

In den Figuren 23, 24 und 25 sind schließlich noch Varianten dargestellt, mittels derer der Abzweigkanal an der mediumführenden Leitung festgelegt ist und hierdurch zur Aufnahme größerer Druckkräfte geeignet ist. In Figur 23 ist ein Abzweigkanal 241 an einer mediumführenden Leitung 242 festgelegt, indem ein am Abzweigkanal 241 vorgesehener Flansch 243 einen Spanndraht 244 trägt, der die mediumführende Leitung 242 umgreift. Der Spanndraht ist hierzu auf der der mediumführenden Leitung abgewandten Seite des Flansches mit Zustellschrauben 245, 246 versehen, durch die er verkürzt und somit die Anpreßkraft des Abzweigkanals gegen die mediumführende Leitung erhöht werden kann.

In ähnlicher Weise arbeitet die Befestigungsvorrichtung nach Figur 24, bei der ein Abzweigkanal 251 an einer mediumführenden Leitung 252 festgelegt wird, indem ein am Abzweigkanal vorgesehner Flansch 253 mit einem Spannbügel 254 zusammenwirkt, der ebenfalls die mediumführende Leitung umgreift und über Zustellschrauben den Anpreßdruck des Abzweigkanals gegen die Leitung erhöhen kann.

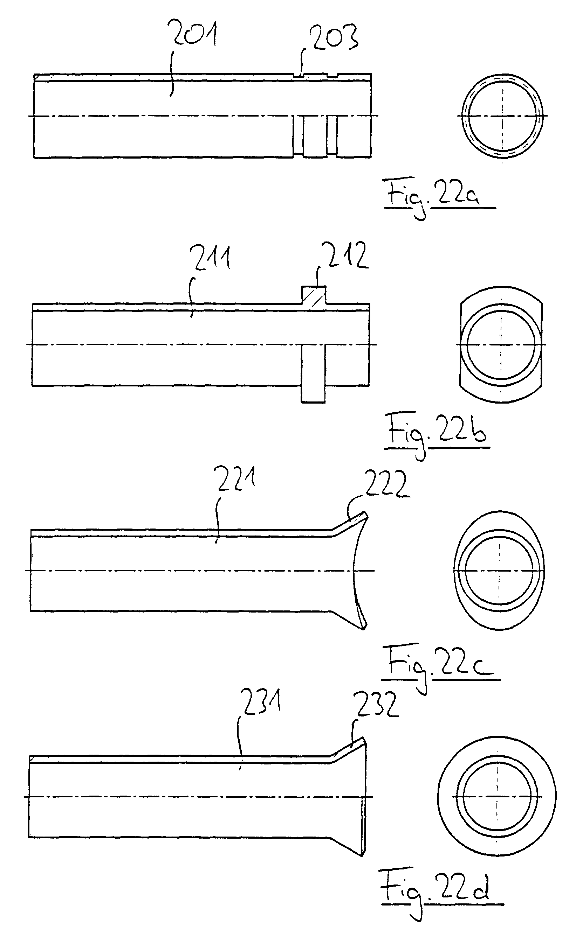

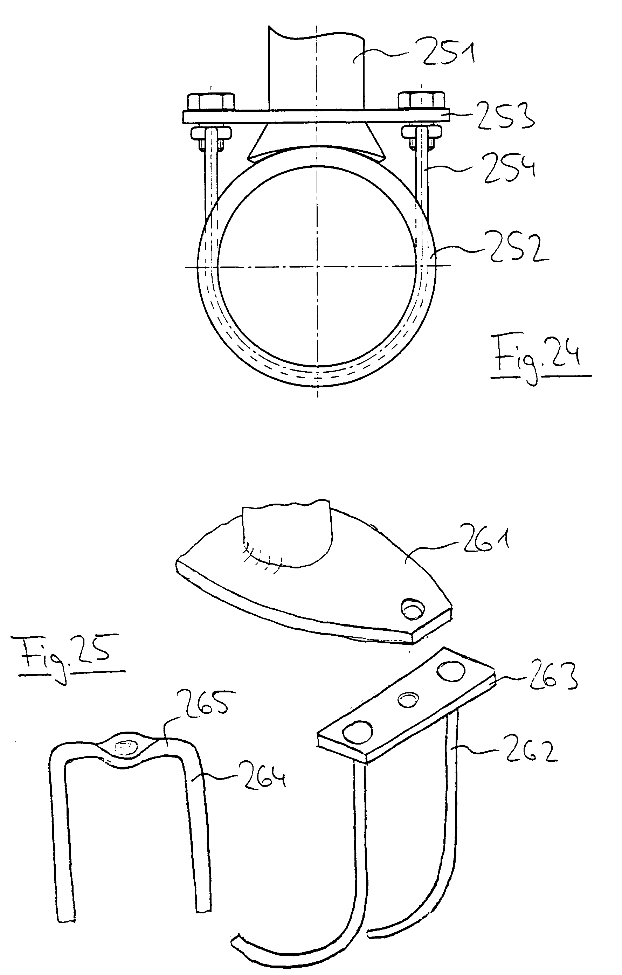

Figur 25 enthält schließlich noch Varianten für einen Abzweigkanalflansch 261 und einen Spannbügel 262, der ebenfalls einen Flansch 263 aufweist, der über (nicht dargestellte) Stellmittel am Abzweigkanalflansch festgelegt werden kann. In der linken Bildhälfte von Figur 25 ist schließlich noch eine vereinfachte Form eines Spannbügels 264 mit Befestigungsflansch 265 dargestellt.

Zusammenfassend wird durch die vorliegende Erfindung eine Abzweigvorrichtung und ein Verfahren zum Erstellen eines Abzweiges zur Verfügung gestellt, wobei die mediumführende Leitung nicht außer Betrieb gesetzt werden muß, da erfindungsgemäß ein Gehäuse um die mediumführende Leitung gelegt, mit einem Abzweigkanal versehen wird und mit aushärtbarem Material verfüllt wird und erst hierauf eine Bohrung in die Leitung eingebracht wird. Darüber hinaus sind die erfindungsgemäße Vorrichtung und das Verfahren insbesondere auch zum Einsatz bei gewellten mediumführenden Leitungen geeignet, welche bisher nur über das Einfügen von T-förmigen Anschlußstücken möglich war, was jeweils das vorübergehende Stillegen der gesamten Anlage erforderlich machte. Somit ist es möglich, die Abzweigvorrichtung noch nachträglich ohne größeren Aufwand vorzusehen, ohne daß dies bereits beim Verlegen der mediumführenden Leitung berücksichtigt bzw. vorbereitet werden müßte. Außerdem können die Abzweige an beliebigen Stellen der mediumführenden Leitung angebracht werden, wodurch beispielsweise Einschränkungen für das grabenlose Verlegeverfahren entfallen. Schließlich werden durch das direkte Anbohren der mediumführenden Leitungen aufwendige Flanschlösungen und das hiermit verbundene Dichtheitsrisiko vermieden.

## Patentansprüche

1. Abzweigvorrichtung, die eine Abzweigleitung an eine mediumführende, insbesondere ring- oder schraubengangförmig gewellte Leitung anschliesst, mit einem die mediumführende Leitung (2, 18, 32, 49, 75) im Abzweigbereich umgebenden und eine Öffnung (11, 39) zum Anschluß der Abzweigleitung (5, 42, 56) aufweisenden Gehäuse (10, 20, 21, 35, 52, 61, 81) wobei, das Gehäuse mit aushärtbarem Material (16, 36) gefüllt ist und die Einheit aus Gehäuse und Material die Leitung mediendicht umschließt,
**dadurch gekennzeichnet,**
**daß** die Abzweigvcrrichtung einen rohrförmigen Abzweigkanal (12, 40, 57) aufweist, der sich von der mediumführenden Leitung unter Durchquerung des aushärtbaren Materials zur Gehäuseöffnung erstreckt, und
**daß** durch den Abzweigkanal eine Bohrung (13, 41) in die mediumführende Leitung eingebracht ist.

2. Abzweigvorrichtung nach Anspruch 1,
**dadurch gekennzeichnet,**
**daß** der Abzweigkanal (201, 211, 221, 231) gegenüber dem aushärtenden Material (208) festgelegt und insbesondere mit diesem in Axialrichtung des Kanals formschlüssig verbunden ist.

3. Abzweigvorrichtung nach zumindest einem der vorstehenden Ansprüche,
**dadurch gekennzeichnet,**
**daß** der Abzweigkanal (201) gegenüber dem Gehäuse (202) festgelegt und insbesondere mit diesem in Axialrichtung des Kanals formschlüssig verbunden ist.

4. Abzweigvorrichtung nach Anspruch 2 oder 3,
**dadurch gekennzeichnet,**
**daß** der Formschluß über am Abzweigkanal (201, 211, 221, 231) vorgesehene Vertiefungen (203) und/oder Aufweitungen (212, 222, 232) hergestellt ist.

5. Abzweigvorrichtung nach Anspruch 4,
**dadurch gekennzeichnet,**
**daß** die Vertiefungen (203) und/oder Aufweitungen (212, 222, 232) über den Umfang des Abzweigkanals umlaufen.

6. Abzweigvorrichtung nach zumindest einem der vorstehenden Ansprüche,
**dadurch gekennzeichnet,**
**daß** der Abzweigkanal (241, 251) gegenüber der mediumführenden Leitung (242, 252) festlegbar und insbesondere mit dieser formschlüssig verbindbar ist.

7. Abzweigvorrichtung nach Anspruch 6,
**dadurch gekennzeichnet,**
**daß** der Formschluß über am Abzweigkanal (241, 251) festgelegte und zum Umgreifen der mediumführenden Leitung (242, 252) dienenden Umschlingungsmittel (244, 254), insbesondere Klammern, Bügel, Bänder, hergestellt ist.

8. Abzweigvorrichtung nach zumindest einem der vorstehenden Ansprüche,
**dadurch gekennzeichnet,**
**daß** der Abzweigkanal (12, 40, 57) beim Verfüllen des aushärtbaren Materials (16, 36) als verlorenes Schalelement fungiert.

9. Abzweigvorrichtung nach zumindest einem der vorstehenden Ansprüche,
**dadurch gekennzeichnet,**
**daß** die Abzweigleitung (5) am Abzweigkanal (12) festgelegt ist.

10. Abzweigvorrichtung nach zumindet einem der vorstehenden Ansprüche,
**dadurch gekennzeichnet,**
**daß** der Abzweigkanal (12) aus ferritischem Stahl besteht.

11. Abzweigvorrichtung nach zumindest einem der vorstehenden Ansprüche,
**dadurch gekennzeichnet,**
**daß** das Gehäuse (110, 20, 21, 35, 51, 61, 71) aus zumindest zwei achsparallelen, insbesondere einstückig miteinander verbundenen Teilschalen (20, 21, 82, 83, 91a, 91b, 93 - 96, 107, 108) besteht, daß jede Teilschale dazu dient, einen Teilbereich des Umfanges der mediumführenden Leitung (2, 18, 32, 49, 75) zu umfassen, und daß die Teilschalen miteinander verbunden sind.

12. Abzweigvorrichtung nach Anspruch 11,
**dadurch gekennzeichnet,**
**daß** das gegenseitige Festlegen der Teilschalen (20, 21, 28, 83, 93, 96) über Ringschellen (54, 55) Spannbänder (64, 65, 76) oder Verschlußkeile (23, 85, 97, 98) erfolgt.

13. Abzweigvorrichtung nach zumindest einem der vorstehenden Ansprüche,
**dadurch gekennzeichnet,**
**daß** das Gehäuse (35, 71) zwei Aussparungen (37, 38, 73, 74) zum Durchtritt der mediumführenden Leitung (32, 75) aufweist.

14. Abzweigvorrichtung nach zumindest einem der vorstehenden Ansprüche,
**dadurch gekennzeichnet,**
**daß** das Gehäuse (10, 20, 21, 35, 51, 61, 71) aus Metall, insbesondere aus Edelstahl- oder Stahlblech oder aus Kunststoff insbesondere mit Glasfaserverstärkung besteht.

15. Abzweigvorrichtung nach zumindest einem der vorstehenden Ansprüche,
**dadurch gekennzeichnet,**
**daß** das Gehäuse einen Einfüllstutzen (121) für das aushärtbare Material aufweist.

16. Abzweigvorrichtung nach zumindest einem der vorstehenden Ansprüche,
**dadurch gekennzeichnet,**
**daß** das aushärtbare Material (16, 36) aus einem kalt aushärtenden Gießmittel besteht.

17. Abzweigvorrichtung nach Anspruch 16,
**dadurch gekennzeichnet,**
**daß** das Gießmittel temperaturbeständiges Epoxidharz enthält.

18. Abzweigvorrichtung nach Anspruch 16,
**dadurch gekennzeichnet,**
**daß** das Gießmittel zusammengesetzt ist aus zwei miteinander vermischten Komponenten und einem kurz vor dem Vergießen zuzugebenden Startermittel.

19. Abzweigvorrichtung nach Anspruch 16,
**dadurch gekennzeichnet,**
**daß** das Gießmittel pulverförmige Füllstoffe aufweist.

20. Verfahren zum Erstellen von Abzweigen für mediumführende, insbesondere ring- oder schraubengangförmig gewellte Leitungen, wobei
eine mediumführende Leitung (2, 18, 32, 49 75) im Abzweigbereich mit einem sie umgebenden und eine Öffnung (1, 39) zum Anschluß der Abzweigleitung (5, 42, 56) aufweisenden Gehäuse (10, 20, 21, 35, 51, 61, 71) versehen wird,
**dadurch gekennzeichnet**,
- daß im Gehäuse ein sich von dem Abzweigbereich der mediumführenden Leitung bis zumindest zur Öffnung (1, 39) im Gehäuse erstrekkender rohrförmiger Abzweigkanal (12, 40, 57) angeordnet wird,
- daß hierauf das Gehäuse mit einem nach dem Verfüllen aushärtenden Material (16, 36) verfüllt wird, so daß die Einheit aus Gehäuse und Material die Leitung mediendicht umschließt, wobei der Abzweigkanal als verlorene Schalung fungiert, und
- daß anschließend durch den Abzweigkanal eine Bohrung (13, 41) in die mediumführende Leitung eingebracht wird.

21. Verfahren nach Anspruch 20,
**dadurch gekennzeichnet,**
**daß** die Abzweigleitung (5) nach dem Einbringen der Bohrung (13, 41) an den Abzweigkanal (12) angeschlossen wird.

22. Verfahren nach zumindest einem der Ansprüche 20 und 21,
**dadurch gekennzeichnet,**
**daß** der Abzweigkanal beim Einbringen der Bohrung und/oder beim Anschließen der Abzweigleitung gegen die Umgebung abgedichtet ist.

23. Verfahren nach Anspruch 22,
**dadurch gekennzeichnet,**
**daß** das Abdichten des Abzweigkanals gegenüber der Umgebung über ein in dem Abzweigkanal angeordnetes Verschlußelement erfolgt.

24. Verfahren nach zumindest einem der Ansprüche 20 bis 23,
**dadurch gekennzeichnet,**
**daß** der Abzweigkanal vor dem Einfüllen des aushärtbaren Materials an der mediumführenden Leitung und/oder dem Gehäuse festgelegt wird.

25. Verfahren nach Anspruch 24,
**dadurch gekennzeichnet,**
**daß** das Festlegen des Abzweigkanals durch axialen Formschluß erfolgt.

26. Verfahren nach zumindest einem der Ansprüche 20 bis 25,
**dadurch gekennzeichnet,**
**daß** als aushärtbares Material (16, 36) ein kalt aushärtendes, insbesondere temperaturbeständiges Epoxidharz enthaltendes Gießmittel verwendet wird.

27. Verfahren nach zumindest einem der Ansprüche 20 bis 26,
**dadurch gekennzeichnet,**
**daß** das Verfüllen des aushärtenden Materials (36) durch die Öffnung (39) erfolgt.

28. Verfahren nach zumindest einem der Ansprüche 20 bis 27,
**dadurch gekennzeichnet,**
**daß** das Verfüllen des aushärtbaren Materials durch einen am Gehäuse vorgesehenen Einfüllstutzen (121) erfolgt.

29. Verfahren nach zumindest einem der Ansprüche 1 bis 28,
**dadurch gekennzeichnet,**
**daß** das Gehäuse (35,71) zwei Aussparungen (37, 38, 73, 73) zum Durchtritt der mediumführenden Leitung aufweist, daß der Querschnitt der Aussparungen dem Außendurchmesser der Leitung angepaßt ist, und daß der zwischen den Aussparungen (37, 38, 73, 74) und der mediumführenden Leitung (32, 75) belassene Bereich von aushärtbarem Material (36) abgedichtet wird.

30. Verfahren nach zumindest einem der Ansprüche 20 bis 29,
**dadurch gekennzeichnet,**
**daß** das Gehäuse (10, 20, 21, 35, 51, 61, 71) die mediumführende Leitung (2, 18, 32, 49, 75) mit radialem Abstand umgibt.

## Claims

1. Branch device joining a branch conduit to a medium-carrying, especially annularly or helically corrugated, conduit, the branch device having a housing (10, 20, 21, 35, 52, 61, 81) which surrounds the medium-carrying conduit (2, 18, 32, 49, 75) in the branch region and has an opening (11, 39) for the connection of the branch conduit (5, 42, 56), wherein the housing is filled with hardenable material (16, 36) and the unit consisting of housing and material encompasses the conduit in a media-tight manner,
**characterised in that**
the branch device has a tubular branch channel (12, 40, 57) which, passing through the hardenable material, extends from the medium-carrying conduit to the opening in the housing; and a bore (13, 41) is made through the branch channel into the medium-carrying conduit.

2. Branch device according to claim 1,
**characterised in that**
the branch channel (201, 211, 221, 231) is fixed in place relative to the hardenable material (208) and, especially, is interlockingly connected thereto in the axial direction of the channel.

3. Branch device according to at least one of the preceding claims,
**characterised in that**
the branch channel (201) is fixed in place relative to the housing (202) and, especially, is interlockingly connected thereto in the axial direction of the channel.

4. Branch device according to claim 2 or 3,
**characterised in that**
the interlocking connection is effected by means of indented portions (203) and/or expanded portions (212, 222, 232) provided on the branch channel (201, 211, 221, 231).

5. Branch device according to claim 4,
**characterised in that**
the indented portions (203) and/or expanded portions (212, 222, 232) extend around the periphery of the branch channel.

6. Branch device according to at least one of the preceding claims,
**characterised in that**
the branch channel (241, 251) can be fixed in place relative to the medium-carrying conduit (242, 252) and, especially, can be interlockingly connected thereto.

7. Branch device according to claim 6,
**characterised in that**
the interlocking connection is effected by means of encircling means (244, 254), especially clips, straps, belts, that are fixed in place on the branch channel (241, 251) and serve for engaging around the medium-carrying conduit (242, 252).

8. Branch device according to at least one of the preceding claims,
**characterised in that**
the branch channel (12, 40, 57) acts as a lost shell element during the introduction of the hardenable material (16, 36).

9. Branch device according to at least one of the preceding claims,
**characterised in that**
the branch conduit (5) is fixed in place on the branch channel (12).

10. Branch device according to at least one of the preceding claims,
**characterised in that**
the branch channel (12) consists of ferritic steel.

11. Branch device according to at least one of the preceding claims,
**characterised in that**
the housing (110, 20, 21, 35, 51, 61, 71) consists of at least two axially parallel part-shells (20, 21, 82, 83, 91a, 91b, 93-96, 107, 108), which are especially integrally connected to one another; each part-shell serves to surround a portion of the periphery of the medium-carrying conduit (2, 18, 32, 49, 75); and the part-shells are connected to one another.

12. Branch device according to claim 11,
**characterised in that**
the part-shells (20, 21, 28, 83, 93, 96) are fixed to one another by means of annular clips (54, 55), tensioning belts (64, 65, 76) or closure clamps (23, 85, 97, 98).

13. Branch device according to at least one of the preceding claims,
**characterised in that**
the housing (35, 71) has two openings (37, 38, 73, 74) for the passage of the medium-carrying conduit (32, 75).

14. Branch device according to at least one of the preceding claims,
**characterised in that**
the housing (10, 20, 21, 35, 51, 61, 71) consists of metal, especially of sheet special steel or sheet steel or of plastics, especially reinforced with glass fibres.

15. Branch device according to at least one of the preceding claims,
**characterised in that**
the housing has a filling connection (121) for the hardenable material.

16. Branch device according to at least one of the preceding claims,
**characterised in that**
the hardenable material (16, 36) consists of a cold-curable casting medium.

17. Branch device according to claim 16,
**characterised in that**
the casting medium comprises temperature-resistant epoxy resin.

18. Branch device according to claim 16,
**characterised in that**
the casting medium is composed of two components mixed with one another and a starter agent to be added shortly before casting.

19. Branch device according to claim 16,
**characterised in that**
the casting medium has pulverulent fillers.

20. Method of making branches for medium-carrying, especially annularly or helically corrugated, conduits, wherein a medium-carrying conduit (2, 18, 32, 49, 75) is provided in the branch region with a housing (10, 20, 21, 35, 51, 61, 71) that surrounds the conduit and has an opening (1, 39) for the connection of a branch conduit (5, 42, 56),
**characterised in that**
- a tubular branch channel (12, 40, 57) is arranged in the housing, which tubular branch channel (12, 40, 57) extends from the branch region of the medium-carrying conduit at least as far as the opening (1, 39) in the housing,
- the housing is then filled with a material (16, 36) which hardens after filling, so that the unit consisting of housing and material surrounds the conduit in a media-tight manner, the branch channel acting as a lost shell, and
- a bore (13, 41) is then made through the branch channel into the medium-carrying conduit

21. Method according to claim 20,
**characterised in that**
the branch conduit (5) is joined to the branch channel (12) after the bore (13, 41) has been made.

22. Method according to at least one of claims 20 and 21,
**characterised in that**
the branch channel is sealed relative to the environment when the bore is made and/or when the branch conduit is attached.

23. Method according to claim 22,
**characterised in that**
the sealing of the branch channel relative to the environment is effected by way of a closure element arranged in the branch channel.

24. Method according to at least one of claims 20 to 23,
**characterised in that**
the branch channel is fixed in place on the medium-carrying conduit and/or the housing prior to the introduction of the hardenable material.

25. Method according to claim 24,
**characterised in that**
the branch channel is fixed in place by means of axial interlocking.

26. Method according to at least one of claims 20 to 25,
**characterised in that**
as hardenable material (16, 36) there is used a cold-curable, especially temperature-resistant, epoxy-resin-containing casting medium.

27. Method according to at least one of claims 20 to 26,
**characterised in that**
the hardenable material (36) is introduced through the opening (39).

28. Method according to at least one of claims 20 to 27,
**characterised in that**
the hardenable material is introduced through a filling connection (121) provided on the housing.

29. Method according to at least one of claims 1 to 28,
**characterised in that**
the housing (35, 71) has two openings (37, 38, 73, 74) for the passage of the medium-carrying conduit; the cross-section of the openings is matched to the outer diameter of the conduit; and the region left between the openings (37, 38, 73, 74) and the medium-carrying conduit (32, 75) is sealed by hardenable material (36).

30. Method according to at least one of claims 20 to 29,
**characterised in that**
the housing (10, 20, 21, 35, 51, 61, 71) surrounding the medium-carrying conduit (2, 18, 32, 49, 75) is radially spaced apart therefrom.

## Revendications

1. Dispositif de branchement qui raccorde une conduite de branchement à une conduite ondulée, transportant des produits, notamment de forme annulaire ou hélicoïdale, avec un boîtier (10, 20, 21, 35, 52, 61, 81) entourant la conduite transportant les produits (2, 18, 32, 49, 75) dans la partie de branchement et présentant une ouverture (11, 39) pour le raccordement de la conduite de branchement (5, 42, 56), le boîtier étant rempli d'un matériau thermodurcissable (16, 36) et l'unité constituée du boîtier et du matériau entourant la conduite de manière étanche aux produits, **caractérisé en ce que** le dispositif de branchement présente un canal de branchement (12, 40, 57) en forme de tube, qui s'étend de la conduite transportant des produits en traversant le matériau thermodurcissable jusqu'à l'ouverture du boîtier, et **en ce qu**'un alésage (13, 41) est réalisé dans !a conduite transportant des produits par le canal de branchement.

2. Dispositif de branchement selon la revendication 1, **caractérisé en ce que** le canal de branchement (201, 211, 221, 231) est fixé par rapport au matériau thermodurcissable (208) et est notamment raccordé à celui-ci par conjonction de forme dans le sens axial du canal.

3. Dispositif de branchement selon au moins l'une des revendications précédentes, **caractérisé en ce que** le canal de branchement (201) est fixé par rapport au boîtier (202) et est notamment raccordé à celui-ci par conjonction de forme dans le sens axial du canal.

4. Dispositif de branchement selon la revendication 2 ou 3, **caractérisé en ce que** la conjonction de forme est créée à l'aide de creux (203) et/ou d'évasements (212, 222, 232) prévus sur le canal de branchement (201, 211, 221, 231).

5. Dispositif de branchement selon la revendication 4, **caractérisé en ce que** les creux (203) et/ou évasements (212, 222, 232) s'étendent sur le pourtour du canal de branchement.

6. Dispositif de branchement selon au moins l'une des revendications précédentes, **caractérisé en ce que** le canal de branchement (241, 251) peut être fixé par rapport à la conduite transportant les produits (242, 252) et peut être raccordé avec celle-ci par conjonction de forme.

7. Dispositif de branchement selon la revendication 6, **caractérisé en ce que** la conjonction de forme est créée à l'aide de moyens d'enroulement (244, 254), notamment des brides de fixation, des étriers, des bandes, fixés au canal de branchement (241, 251) et servant à envelopper la conduite transportant les produits (242, 525).

8. Dispositif de branchement selon au moins l'une des revendications précédentes, **caractérisé en ce que** le canal de branchement (12, 40, 57) fait fonction d'élément de coffrage perdu lors du remplissage de matériau thermodurcissable (16, 36).

9. Dispositif de branchement selon au moins l'une des revendications précédentes, **caractérisé en ce que** la conduite de branchement (5) est fixée au canal de branchement (12).

10. Dispositif de branchement selon au moins l'une des revendications précédentes, **caractérisé en ce que** le canal de branchement (12) est constitué d'acier ferritique.

11. Dispositif de branchement selon au moins l'une des revendications précédentes, **caractérisé en ce que** le boîtier (110, 20, 21, 35, 51, 61, 71) est constitué d'au moins deux coffrages partiels (20, 21, 82, 83, 91a, 91b, 93-96, 107, 108) parallaxes, raccordés notamment entre eux en une seule pièce, **en ce que** chaque coffrage partiel sert à entourer une partie du pourtour de la conduite transportant les produits (2, 18, 32, 49, 75) et **en ce que** les coffrages partiels sont raccordés entre eux.

12. Dispositif de branchement selon la revendication 11, **caractérisé en ce que** la fixation mutuelle des coffrages partiels (20, 21, 28, 83, 93, 96) est réalisée par des brides de fixation annulaires (54, 55), des bandes de serrage (64, 65, 76) ou des coins d'obturation (23, 85, 97, 98).

13. Dispositif de branchement selon au moins l'une des revendications précédentes, **caractérisé en ce que** le boîtier (35, 71) présente deux évidements (37, 38, 73, 71) pour le passage de la conduite (32, 75) transportant des produits.

14. Dispositif de branchement selon au moins l'une des revendications précédentes, **caractérisé en ce que** le boîtier (10, 20, 21, 35, 51, 61, 71) est constitué de métal, notamment d'acier spécial ou de tôle ou de plastique notamment avec renfort en fibre de verre.

15. Dispositif de branchement selon au moins l'une des revendications précédentes, **caractérisé en ce que** le boîtier présente une tubulure de remplissage (121) pour le matériau thermodurcissable.

16. Dispositif de branchement selon au moins l'une des revendications précédentes, **caractérisé en ce que** le matériau thermodurcissable (16, 36) est constitué d'un produit de coulée durcissant à froid.

17. Dispositif de branchement selon la revendication 16, **caractérisé en ce que** le produit de coulée contient de la résine époxy résistant à chaud.

18. Dispositif de branchement selon la revendication 16, **caractérisé en ce que** le produit de coulée est composé de deux composants mélangés entre eux et d'un produit de démarrage à ajouter peu de temps avant la coulée.

19. Dispositif de branchement selon la revendication 16, **caractérisé en ce que** le produit de coulée présente des charges sous forme de poudre.

20. Procédé pour établir des branchements pour des conduites de branchement ondulées, transportant des produits, notamment de forme annulaire ou hélicoïdale, un boîtier (10, 20, 21, 35, 51, 61, 71) entourant une conduite (2, 18, 32, 49, 75) transportant des produits dans la partie de branchement et présentant une ouverture (1, 39) pour le raccordement de la conduite de branchement (5, 42, 56) étant prévu, **caractérisé en ce qu**'un canal de branchement (12, 40, 57) en forme de tube, s'étendant de la partie de branchement de la conduite transportant des produits au moins jusqu'à l'ouverture (1,39) dans le boîtier, est placé dans le boîtier, **en ce que** le boîtier est rempli d'un matériau thermodurcissable (16, 36) après le remplissage, de sorte que l'unité constituée du boîtier et du matériau entoure la conduite de manière étanche aux produits, le canal de branchement faisant fonction de coffrage perdu, et en ce qu'un alésage (13, 41) est réalisé dans la conduite transportant des produits par le canal de branchement.

21. Procédé selon la revendication 20, **caractérisé en ce que** la conduite de branchement (5) est raccordée après la réalisation de l'alésage (13, 41) sur le canal de branchement (12).

22. Procédé selon au moins l'une des revendications 20 et 21, **caractérisé en ce que** le canal de branchement est étanchéifié par rapport à l'environnement lors de la réalisation de l'alésage et/ou lors du raccordement de la conduite de branchement.

23. Procédé selon la revendication 22, **caractérisé en ce que** l'étanchéification du canal de branchement par rapport à l'environnement est réalisée à l'aide d'un élément d'obturation placé dans le canal de branchement.

24. Procédé selon au moins l'une des revendications 20 à 23, **caractérisé en ce que** le canal de branchement est fixé à la conduite transportant des produits et/ou au boîtier avant le remplissage du matériau thermodurcissable .

25. Procédé selon la revendication 24, **caractérisé en ce que** la fixation du canal de branchement est réalisée par conjonction de forme axiale.

26. Procédé selon au moins l'une des revendications 20 à 25, **caractérisé en ce qu**'un produit de coulée contenant une résine époxy durcissant à froid, notamment résistant à chaud, est utilisé comme matériau thermodurcissable.

27. Procédé selon au moins l'une des revendications 20 à 26, **caractérisé en ce que** le remplissage de matériau thermodurcissable (36) est réalisé par l'ouverture (39).

28. Procédé selon au moins l'une des revendications 20 à 27, **caractérisé en ce que** le remplissage du matériau thermodurcissable est réalisé par une tubulure de remplissage (121) prévue sur le boîtier.

29. Procédé selon au moins l'une des revendications 1 à 28, **caractérisé en ce que** le boîtier (35, 71) présente deux évidements (37, 38, 73, 71) pour le passage de la conduite transportant des produits, **en ce que** la section des évidements est adaptée au diamètre extérieur de la conduite, et **en ce que** la partie laissée entre les évidements (37, 38, 73, 74) et la conduite (32, 75) transportant des produits est étanchéifiée par un matériau thermodurcissable (36).

30. Procédé selon au moins l'une des revendications 20 à 29, **caractérisé en ce que** le boîtier (10, 20, 21, 35, 51, 61, 71) entoure la conduite (2, 18, 32, 49, 75) transportant les produits à une distance radiale.
